# EUROPEAN PATENT SPECIFICATION

(11) **EP 4 555 295 B1**
(45) Date of publication and mention of the grant of the patent: **04.11.2026**
(21) Application number: 22741291.3
(22) Date of filing: 11.07.2022
(51) Int. Cl.: G01N 1/06, G01N 1/28, G01N 1/08

(54) **AUTOMATED METHOD OF DISSECTING BIOLOGICAL MATERIAL**
AUTOMATISIERTES VERFAHREN ZUR DISSEKTION VON BIOLOGISCHEM MATERIAL
PROCÉDÉ AUTOMATISÉ DE DISSECTION DE MATÉRIAU BIOLOGIQUE

(43) Date of publication of application: 21.05.2025
(73) Proprietor: Xyall B.V., 5633 AJ Eindhoven (NL)
(72) Inventor: WIMBERGER-FRIEDL, Reinhold, 5633 AJ Eindhoven (NL); LUCASSEN, Juriaan, 5629 GZ Eindhoven (NL)
(74) Representative: DeltaPatents B.V.
(86) International application number: PCT/EP2022/069274
(87) International publication number: WO 2024/012649

(56) References cited:
- WO-A1-2020/254250
- WO-A1-2022/063695

## Description

### FIELD OF THE INVENTION

The invention relates to an automated method of dissecting biological material from a sample disposed on a planar substrate, such as a glass slide, using a dissection tool having a scraping blade and a tool body within which scraped material is collected during dissection.

### BACKGROUND ART

Such a method and an apparatus for executing the method are known from WO 202054250. The position of the dissection tool relative to the sample is controlled such that the scraping blade selectively engages with material in an identified region of interest (ROI). The blade is brought into contact with the glass slide and is pushed forward through biological material in the ROI, so as to scrape off the material and collect it within the tool. A further example is disclosed in WO 2022063695, whereby the blade is arranged at an orifice and suction is applied during dissection, such that sample material detached via scraping is drawn into the orifice and an internal cavity of the tool, where it is collected at the underside of a filter element that spans the internal cavity. The sample material is then transferred to a collection tube by arranging the tube around the tool orifice in an airtight manner and generating a pressure pulse that ejects the material into the tube.

In order to optimise the quality of the subsequent analysis, it is important that only material from the ROI is collected and that ROI material does not get left behind on the glass slide. The ROI material must rupture in order to get collected inside the tool cavity. At the end of a scraping motion, the blade is lifted from the slide. Any scraped material that remains connected to material on the slide, at the location where the blade is lifted, can get pulled out of the cavity. When employing suction, the present inventors have found that rupture can be ensured by applying a sufficiently large suction force during dissection. However, this has the drawback of increasing the adhesion of the collected material at the underside of the filter, making it more difficult to reliably eject the material into the collection tube.

Consequently, there is still room for improvement in terms of defining a method of scraping that overcomes the problem of sample material getting left behind of the slide, without the need for high suction forces.

### SUMMARY OF THE INVENTION

The invention resides in an automated method of dissecting biological material from a region of interest (ROI) within a sample disposed on a planar substrate according to claim 1.

The method comprises steps of:
- identifying a boundary of the region of interest;
- calculating a scraping path for the scraping blade, based on the identified boundary, which will cause the blade to engage with and scrape off all material within the ROI; and
- controlling the position of the dissection tool relative to the planar substrate, such that the scraping blade follows the calculated scraping path.

The scraping path includes one or more individual scraping motions in which the blade is pressed onto the planar substrate at a start location within or on the identified boundary and is moved forward through the ROI until reaching a stop location and being raised off the planar substrate. In accordance with the invention, the scraping path is calculated such that the stop location of each individual scraping motion is positioned in an area within the identified ROI boundary that has already been scraped.

In one embodiment, the calculated scraping path comprises at least one scraping motion in which the identified ROI boundary is scraped. In one example, this is the first scraping motion. The blade has a leading edge that is moved forward during dissection, so as to scrape material from the planar substrate, e.g. glass slide. The blade further has inner and outer edges which cut a scraping lane through the sample material. When scraping the ROI boundary, the position of the blade is controlled such that the outer edge of the blade is used to sever the material at the ROI boundary from adjacent sample material. The blade follows the identified ROI boundary and creates a first scraping lane. The blade is raised only after it has returned to and travelled beyond the start location, such that the stop location is positioned on the first scraping lane, i.e. on an already scraped part of the ROI boundary.

Suitably, the dissection tool is mounted to a tool carrier on a dissection apparatus which executes the method, so as to be rotational about a vertical axis of rotation that is normal to the glass slide on which the sample is disposed. Preferably, the vertical rotation axis coincides with the outer edge of the scraping blade. As will be understood, the apparatus is further equipped with actuators that enable the movement of the blade to be controlled relative to the planar substrate in x- and y-direction during scraping and with an actuator that allows the blade to be lowered and raised.

In an automated method of dissection, accuracy is highly important, but optimisation of speed and efficiency is also desirable. It might be thought that the most efficient solution would be to lift the blade just before it has returned to the start location, whereby the remaining distance would be less than a width of the blade, leaving a small unscraped patch. This could then be scraped by rotating the blade such that the leading edge of the blade faces toward an interior region of the ROI, and then starting a subsequent scraping motion at the unscraped part of the identified ROI boundary.

As mentioned above, this incurs the risk of material getting pulled out of the tool internal cavity when the blade is lifted. Furthermore, the present inventors have found that during scraping, material gets pushed forward by the leading edge of the scraping blade, which although thin e.g. 0.03 - 0.1 mm, has a greater thickness that that of a typical tissue sample 0.003 - 0.01 mm. This pushed-forward material can also get left behind if the blade is lifted before reaching an already scraped area, leading to greater inaccuracy of the scraping process.

After the boundary has been scraped, possibly in the first scraping motion, the interior region of the ROI may then be scraped in a number of subsequent scraping motions in which blade is brought into contact with the glass slide at a start location on the created first scraping lane and is moved inward until reaching a stop location at a different area of the first scraping lane.

In the above example, the first scraping motion of the determined scraping path creates a first scraping lane whose outer contour coincides with the ROI boundary.

In an alternative embodiment, which may be advantageously applied when the tissue sample has a high tear strength and exhibits flaking during scraping, the first scraping motion begins in an interior region within the identified ROI boundary. Flaking can occur in the case of a paraffin-embedded sample where the tumour tissue has a high density and the paraffin embedding is locally incomplete. As a result, the tissue sample can tear at a relatively weak point when the scraping blade is pushed forward through the sample material, instead of being accurately severed from adjacent material by an outer edge of the blade. Consequently, a scraping motion that follows the outer contour of the ROI boundary incurs the risk of unwanted sample material being collected.

In the alternative embodiment, the start location of the first scraping motion lies within the ROI boundary. In one example, the blade is programmed to follow a circuit that fully encloses an interior region within the ROI boundary. As before, the blade is lifted only after it has returned to and passed the start location. In a further example, the first scraping motion is programmed such that blade scrapes an entire internal region of the ROI before being raised from the slide at an already scraped part of the aforementioned internal region.

In subsequent scraping motions, the start location for the blade lies on the ROI boundary, with the blade being oriented essentially parallel to a local contour of the boundary and such that the leading edge faces towards the interior of the ROI. Suitably, the stop location of each subsequent scraping motion lies on the first scraping lane or on a previously created scraping lane.

In embodiments where the first scraping motion defines a circuitous first scraping lane which encloses a region of the ROI, the stop location is positioned on the first scraping lane, after the circuit has been completed and the blade has returned to and passed the start location by a predetermined distance. Suitably, the predetermined distance is based on the known width of the blade and in an example where blade width is 1.0 mm, the predetermined distance is between 20 and 150% of blade width and is greater than a positional tolerance for the blade in the apparatus that is used. In one example of a typical dissection apparatus, the positional tolerance is 0.1 mm.

In a further development, the scraping path comprises a first scraping motion that begins in the interior of the ROI and the subsequent scraping motions of the scraping path are calculated only after it has been determined if the tissue sample under dissection exhibits flaking.

An apparatus that is used to perform automated dissection in accordance with the invention typically comprises an imaging system which is used to obtain an image of the slide. The system comprises an imaging sensor having a position relative to the scraping blade that is calibrated in advance.

Advantageously, the method may further comprise steps of capturing an image of at least a portion of a first scraping lane that is created during the first scraping motion and processing the captured image to determine if an outer edge / boundary of the created scraping lane portion coincides with the programmed path of the blade outer edge. Suitably, the portion of the first scraping lane which serves as a 'test lane' follows a straight line.

If it is determined that the boundary of the aforementioned scraped portion has been cleanly severed from adjacent material, i.e. the scraped lane contains no sample material, the scraping path is then calculated so as to remove the remaining ROI sample material from the slide, whereby one of the subsequent scraping motions is programmed to scrape the outer contour of the identified ROI boundary as described for the first embodiment.

When the result of the image processing is that the boundary of the scraped portion deviates from the programmed path of the blade outer edge, the scraping path that is calculated to remove the remaining ROI material comprises subsequent scraping motions in which the blade is positioned on the identified ROI boundary with an orientation parallel to the local contour and is moved inwards, such as described above.

The step of processing the captured image may suitably comprise detecting the boundary of the scraped portion and comparing the detected boundary with the programmed path, so as to calculate a deviating distance therebetween, if present. A threshold may be set based on a mean absolute deviation of e.g. 0.1 mm and/or on a standard deviation, whereby it is determined that the detected boundary deviates from the programmed path if the threshold is exceeded.

The scraping path is calculated based on the identified ROI boundary. Typically, the boundary will comprise local contour portions that intersect at an angle and the method comprises estimating a length of intersecting portions and estimating the angle at which they intersect. Advantageously, the scraping path is calculated according to one or more further rules that enhance the accuracy of dissection as well as speed and efficiency.

The leading edge of the scraping blade has a maximum effective width when it is oriented perpendicular to the direction of forward translation. This creates a scraping lane of corresponding width when the blade moves forward through the ROI material. The effective width can be reduced by changing the angle of orientation of the blade leading edge relative to the direction of translation.

A further rule that may be applied when calculating the scraping path is that the leading edge of the blade is oriented perpendicular to the direction of translation, unless the blade width exceeds a local width of the ROI. Accordingly, the step of calculating the scraping path may include estimating a local width of the ROI that is to be scraped in a particular scraping motion. When the local width is greater than the maximum blade width, the leading edge of the blade is oriented perpendicular to the direction of translation. This maximises the efficiency of a particular motion. When the estimated local width is narrower than the maximum blade width, the blade is rotated about the vertical axis to adjust the orientation of the blade leading edge relative to the direction of translation, so as to reduce the effective width as required.

A still further rule which may be applied is that blade motion does not stop at a local contour of the identified boundary with the lead leading edge parallel to the local contour and oriented towards the local contour. This prevents ROI material from being pushed outside the boundary.

When the identified boundary comprises a corner, i.e. first and second local contour portions that intersect at an angle of 95 - 100 degrees or less, the angle of intersection is estimated. In embodiments where the boundary of the ROI is scraped using the outer edge of the blade, a further rule which may be applied when calculating the associated scraping motion of the scraping path is that the blade is rotated backwards, about the vertical rotation axis that coincides with the outer edge, before the corner is reached. As mentioned above, the default orientation angle of the blade relative to the first local contour portion of the ROI boundary is 90 degrees, i.e. the leading edge is perpendicular to the first local contour portion. Suitably, the forward motion of the blade is halted before an inner edge of the blade would reach the second local contour portion and the angular orientation of the blade relative to the first local contour portion is adjusted to be smaller than the estimated angle of the corner, before forward motion continues.

Advantageously, subsequent scraping motions of the calculated scraping path creates scraping lanes which are straight and parallel to each other. This helps to optimise the speed and efficiency of the dissection process. To facilitate accuracy, the scraping path may be determined such that adjacent scraping lines overlap each other somewhat by e.g. 5 - 20% of lane width. In a further development, the method may comprise identifying a direction in which the region of interest is of maximum length or in which a local contour portion of the ROI boundary is of maximum length. The scraping path is then calculated such that the parallel scraping lanes are executed in the identified direction of maximum length.

The scraping blade of a dissection tool used in the method of the invention has a straight leading edge with a width of e.g. 1.0 mm. Any of the dissection tools disclosed in WO2022063695 may be used in the method of the invention.

The disclosed tools comprise a filter element that spans the internal cavity, such that scraped ROI material that is suctioned into the tool is caught at an underside of the filter element. The scraped material is transferred to a collection tube by arranging the tube around a distal end of the dissection tool in an airtight manner and generating a pressure pulse that ejects the material.

Preferably, transfer occurs after all of the ROI material has been scraped from the slide. Depending on the size of the ROI, it may occur that the filter becomes somewhat clogged before all of the material has been collected, reducing the effectiveness of suction during dissection. For a particular tool having a filter, a threshold can be defined corresponding to a surface area of scraped material that incurs the risk of clogging. The scraped surface area is determined by the known width of the blade and the length travelled during scraping. A corresponding threshold may be determined for the length of blade travel. When the threshold is reached, it is beneficial to interrupt scraping and execute an intermediate transfer action.

The method may thus additionally comprise calculating the length travelled by the blade during scraping, and interrupting the scraping path, after completion of a scraping motion, when the calculated length reaches the predetermined threshold. The tool is raised only after the blade has entered a region that has already been scraped and may be moved to e.g. a collection stage where the scraped material is transferred. The tool is then returned to the slide and the remainder of the calculated scraping path is executed.

### BRIEF DESCRIPTION OF THE DRAWINGS

The invention will now be further elucidated with reference to the embodiments described hereinafter. In the drawings,
- Fig. 1: shows an example of a tissue sample containing a region of interest to be dissected for analysis;
- Fig. 2a: is a schematic representation of an apparatus for implementing an automated method of dissection according to the invention;
- Fig 2b: is a cross-sectional side view of an example of a dissection tool engaging with a tissue sample on a slide, which may be used in the method of the invention;
- Fig. 2c: is a cross-sectional side view of a further example of a dissection tool, which may be used in the method of the invention;
- Figs 3a and 3b: schematically depict parts of a scraping motion which is not in accordance with the inventive method;
- Fig. 4a: Shows the tissue sample from Fig. 1 in which first and second scraping motions have been conducted in accordance with a first embodiment of the inventive method;
- Figs. 4b and 4c: show an example of a portion of an ROI boundary comprising a corner and depict different positions of the scraping blade as the corner is negotiated;
- Fig. 5: Shows a further example of an ROI boundary comprising a relatively narrow portion and depicts different positions of the scraping blade before entering, during and after leaving the narrow portion;
- Fig. 6: Shows the tissue sample from Fig 1 in which first and second scraping motions have been conducted in accordance with a second embodiment of the inventive method.

It should be noted that items which have the same reference numbers in different figures, have the same structural features and the same functions, or are the same signals. Where the function and/or structure of such an item has been explained, there is no necessity for repeated explanation thereof in the detailed description.

### DETAILED DESCRIPTION OF EMBODIMENTS

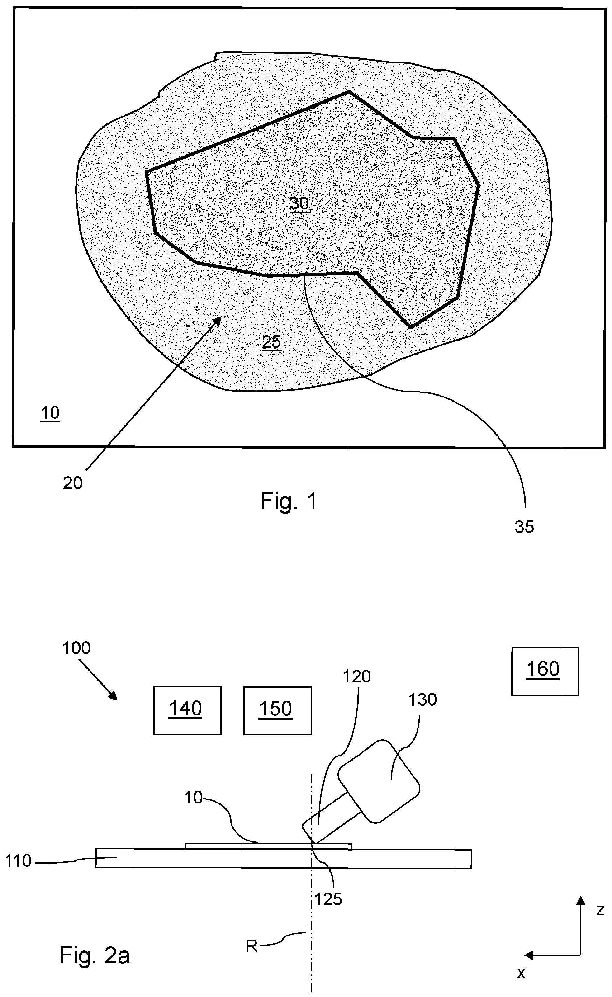

Pathology diagnostic investigation of biological material, such as tissue and cells, forms the basis for many treatment decisions, particularly in oncology. For example, genomic-based tests are performed in order to inform therapy selection for individual patients diagnosed with cancer. The biological material/tissue may be obtained from a biopsy and is then, for example, embedded in paraffin and cut into thin slices which are fixed onto glass slides. These thin slices will be referred to as tissue samples. Other methods of obtaining and preparing biological material are known. An example of a tissue sample disposed on a glass slide 10 is shown in Fig. 1

The tissue sample 20 has a region of interest (ROI) 30 containing material within a boundary 35 of the ROI that is to be subjected to the diagnostic testing. This material must be physically detached from the slide and from unwanted sample material 25 outside of the boundary. The ROI and associated boundary 35 can be identified by staining, or a pathologist may provide markings on a reference slide after analysis under a microscope. The ROI can also be identified via processing of a digital image of the sample. When the ROI has been identified, material is removed/dissected from the slide and then transferred to an analysis arrangement. Typically, the material is transferred to a collection tube, after which sample preparation process steps, like cell lysis, purification and amplification, etc. and further necessary processing steps are performed. As will be understood, the reliability and accuracy of the analysis is optimized by making sure that only dissected material from the ROI is present, but also by maximizing the amount of ROI material collected.

The present invention defines an automated method of dissecting biological material from an ROI within a sample disposed on a planar substrate such as a glass slide, using a tool with a scraping blade that is pressed onto the slide and moved forward through the sample, so as to scrape off ROI material and collect it within a cavity inside the tool. In a first step, a boundary of the ROI is identified. A scraping path for the blade is then calculated, based on the identified boundary. The position of the tool is controlled relative to the slide such the scraping blade follows the calculated scraping path. In the method of the invention, the scraping path is calculated according to one or more rules designed to optimise the accuracy of the dissection by ensuring that material from the region of interest does not get left behind on the glass slide.

Fig. 2a shows a schematic arrangement of an apparatus for executing the method of the invention.

The apparatus 100 comprises a platform 110 for supporting a glass slide 10 on which a tissue sample is disposed, such as the sample 20 shown in Fig. 1. The apparatus is equipped with a dissection tool 120 having a scraping head / scraping blade 125. The dissection tool 120 is preferably in fixed connection with a robotic stage 130, comprising a series of actuators for performing the necessary movements during dissection. Suitably, the robotic stage 130 comprises:
- a rotary actuator, for rotating the tool around a vertical axis R that is normal to the platform 110;
- an X-Y stage for translational movements and
- a Z-stage for vertical movements. The Z-stage may comprise a hinge bearing for position control, to ensure that a constant and precise downward force is applied during dissection.

As will be understood, it is also possible for one or more of the necessary actuators to be connected to the platform 110.

The apparatus further comprises an imaging system 150, which may be used to identify the boundary of the ROI. The imaging system comprises an imaging sensor, whereby the position of the scraping blade relative to the sensor is calibrated beforehand. The apparatus further comprises a processor for calculating a suitable scraping path, based on the identified boundary and a controller 140 which receives the calculated scraping path and controls the robotic stage accordingly, such that the scraping blade of the dissection tool is moved relative to the platform so as to scrape off all material within the identified ROI. Preferably, the apparatus is further equipped with a vacuum generator 160 which generates an uplifting air flow at the scraping blade 125, so that scraped material gets suctioned into the tool internal cavity.

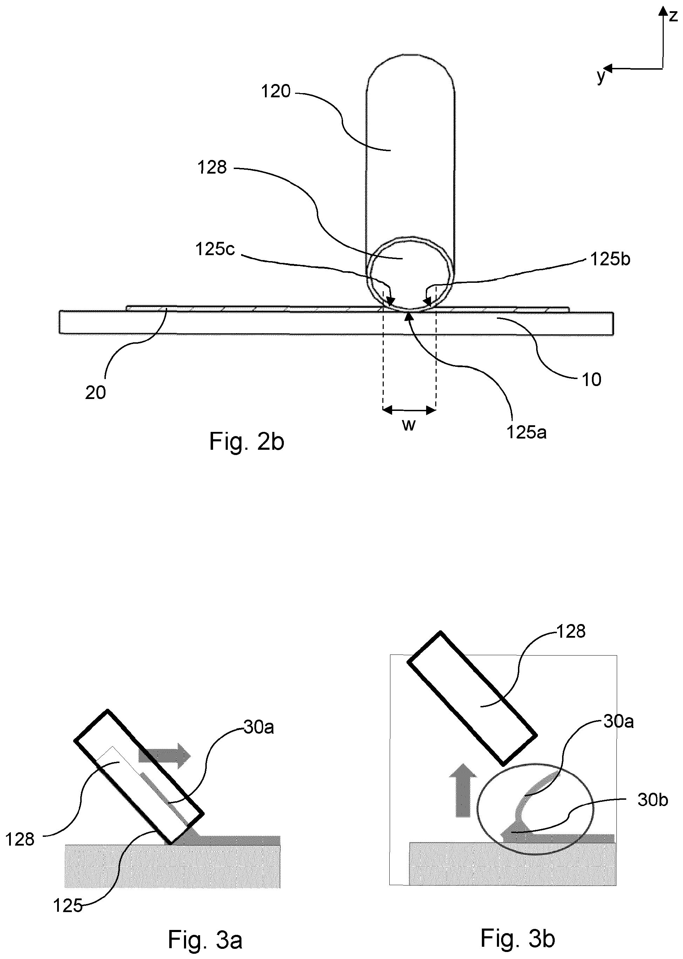

A cross-sectional side view of the tool is shown in Fig. 2b. The tool 120 in the depicted example comprises a thin-walled tube with an internal cavity 128 and a scraping head at the entrance to the internal cavity. A front face or leading edge of the tube serves as the scraping blade 125 of the scraping head The scraping blade has a base portion 125a that is brought into contact with a top surface of the slide 10. The leading edge of the scraping blade is also in contact with the tissue sample 20 in a scraping zone formed by the base portion 125a and opposing side portions 125b, 125c of the tube in the region of contact. Thus, when relative movement occurs in the X-direction, material from the tissue sample is scraped off the slide 10 into the cavity 128 of the dissection tool. In the scraping zone, the portion 125b defines an outer edge of the scraping blade; the portion 125c defines an inner edge of the scraping blade, whereby the leading edge as a whole acts like a chisel. The scraping lane that is cut through the tissue sample 20 has a width w, corresponding to an effective width of the scraping blade between the outer and inner edges 125b, 125c in the scraping zone.

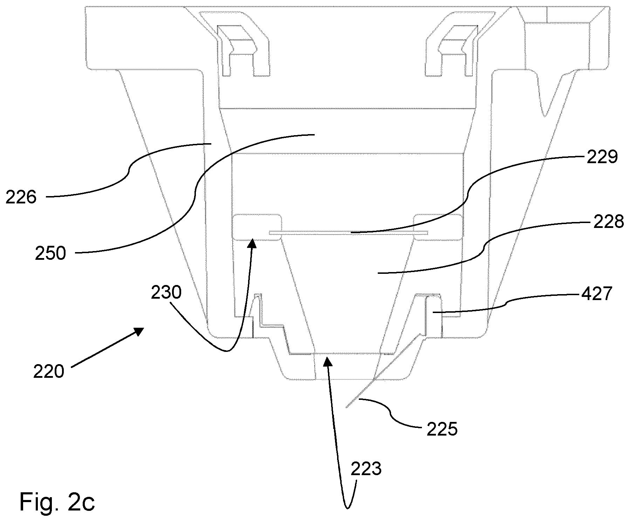

A further example of a dissection tool that may be mounted to a dissection apparatus that implements the method of the invention is shown in Fig. 2c. The tool 220 comprises a main body part 226 formed from a single piece through which the tool internal cavity extends. Part of the internal cavity 228 tapers in diameter towards a tool orifice 223. A further part of the internal cavity is formed by a conical recess 450 which is adapted to connect the tool with a precise alignment to a correspondingly shaped conical protrusion on a tool carrier of the dissection apparatus.

The main tool body part 226 further comprises a seat 230 for locating a filter element 229 in axial direction. The scraping blade 225 of the tool is provided in a second part 227 that is joined to the main body part 226, and extends at an angle relative to a longitudinal centre axis of the tool internal cavity. The second part 427 is overmoulded to the scraping blade 225 in the depicted example and may be irreversibly coupled to the main body part 226 via a form fit, adhesive bonding or other suitable joining method. In other examples, the tool body as a whole is overmoulded to the scraping blade.

The scraping path that is calculated for a particular scraping blade and a particular ROI comprises a number of individual scraping motions in which the scraping blade is brought into contact with the glass slide at a start location and is moved relative to the slide until reaching a stop location and being lifted from the slide. When the scraping blade 125 is moved forward through the ROI material, as shown in Fig 3a, the material may get detached in the form of a ribbon 30a which is guided or sucked into the tool cavity during dissection. If the blade is lifted while a leading edge of the ribbon 30a remains attached to adjacent sample material, the ribbon of material can get pulled out of the cavity, as shown in Fig. 3b. The front face / leading edge of the scraping blade also pushes sample material forward during dissection, which creates an accumulation 30b or "mound" of ROI material in front of the blade. This material can also get left behind, if the accumulation in front of the blade is not taken into account in the scraping path.

In accordance with the invention, the scraping path is calculated such that each individual scraping motion ends at a location within the identified ROI boundary that has already been scraped.

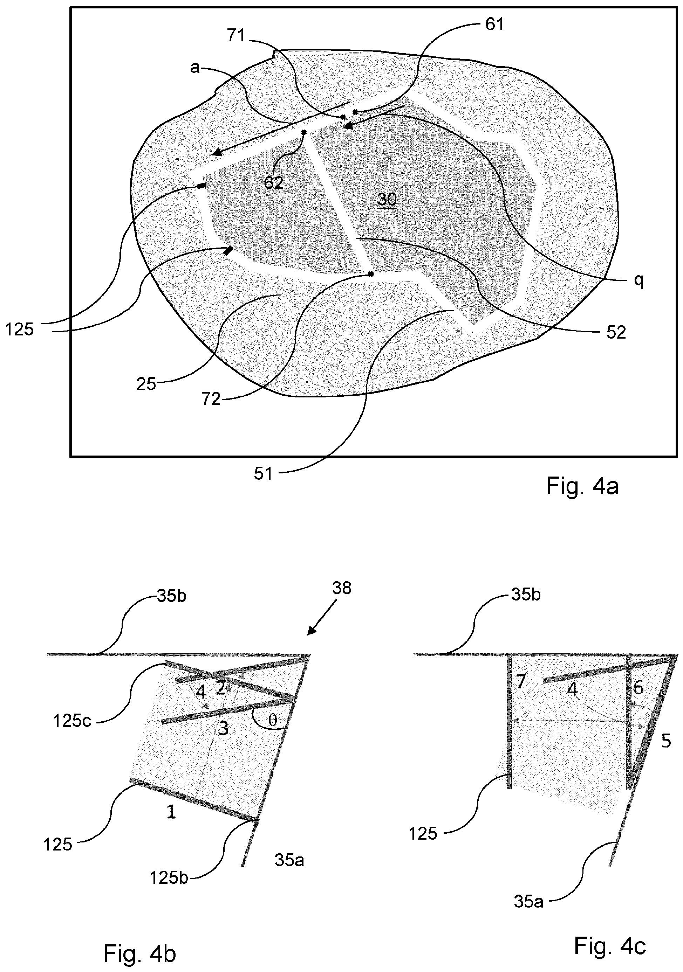

In a preferred embodiment, the scraping path begins with a first scraping motion in which the identified ROI boundary 35 is scraped. With reference to Fig. 4a, which shows the same tissue sample as depicted in Fig. 1, the scraping blade 125 is brought into contact with the slide at a start location 61 on the identified boundary. The boundary typically comprises intersecting local contour portions and one possible way of selecting the start location is to identify the longest of the local contour portions and begin at a location thereon. The blade is oriented such that its leading edge is essentially perpendicular to the boundary at that location and is further positioned such that an outer edge coincides with an outer contour of the boundary. The blade is then moved forwards in a first translational movement, indicated by the arrow a. The blade then follows the boundary in a number of subsequent translational movements, whereby as far as possible, the leading edge remains perpendicular to the local contour of the boundary and the outer edge is used to sever the ROI material from the unwanted sample material 25. When negotiating corners with an angle of 95 - 100 degrees or less, different orientations are typically required, which will be described with reference to Figs. 4b and 4c.

In Fig. 4a, the blade 125 is shown at different locations within the subsequent translations, as a first scraping lane 51 is created that follows the boundary. In a final translational movement, as indicated by the arrow q, the blade returns to the start location 61 and moves beyond it by e.g. 50% of the blade width and is lifted from the slide at stop location 71, which is an already scraped region.

Figs. 4b and 4c depict an example of an ROI boundary which has local contour portions 35a, 35b that intersect at an angle < 90 degrees and thus create a corner 38. Furthermore, the blade 125 is shown at a number of different positions 1 - 7 as the corner 38 is negotiated during the first scraping motion.

The step of identifying the boundary 35 of the ROI suitably comprises estimating an angle of any corners within the boundary. In the depicted example, the corner 38 has an angle of 70 degrees. When approaching the corner and moving forward between positions 1 and 2, the blade 125 is oriented perpendicular to local contour 35a and the blade outer edge 125b coincides with the outer edge of the local contour. The forward motion is halted at position 2, preferably before the inner edge 125c of the blade encounters the local contour 35b. This prevents accumulated ROI material (such as schematically shown in Fig. 3b) getting pushed outside the boundary. The blade is then rotated backwards about the vertical rotation axis R (see Fig. 2), which coincides with the blade outer edge 125b, by an angle of e.g. 30 degrees, to position 3. At position 3, the blade has an angle of orientation θ, relative to local contour portion 35a, which is smaller than the estimated angle of the corner. It is then moved forward to position 4, where the outer edge lies approximately at the intersection between the contour portions 35a and 35b. As shown in Fig. 4b, the blade is then rotated backwards again, to position 5 and then moved forward with an angular adjustment to position 6, where the blade is now perpendicular to local contour 35b and the blade outer edge 125b coincides therewith. The blade is then moved forward in a straight line to position 7.

During an individual scraping motion, the blade remains in contact with the slide. Angular adjustments of the blade about the vertical rotation axis can be made while moving continuously or in steps, optionally while stopping the linear motion.

After the first scraping lane 51 is created, having an outer contour that coincides with the ROI boundary, the interior of the ROI 30 can then be scraped in a number of subsequent scraping motions. Referring again to Fig. 4a, a second scraping lane 52 may be created by bringing the blade into contact with the slide 10 at a second start location 62 on the first scraping lane 51 and moving the blade forward to a second stop location 72 at an opposite side of the first scraping lane. Preferably the subsequent scraping motions are parallel to each other and may overlap each other somewhat, e.g. by 10 - 20% of blade width. The number of additional scraping motions depends on the width of the blade and on the magnitude of the area to be scraped.

The most efficient manner of dissection is to move the blade forward with the front edge perpendicular to the direction of translation, such that blade width is at its maximum. This may not always be possible, for example, when negotiating corners. It may also be ne necessary to change the blade orientation to account for a local width of the ROI.

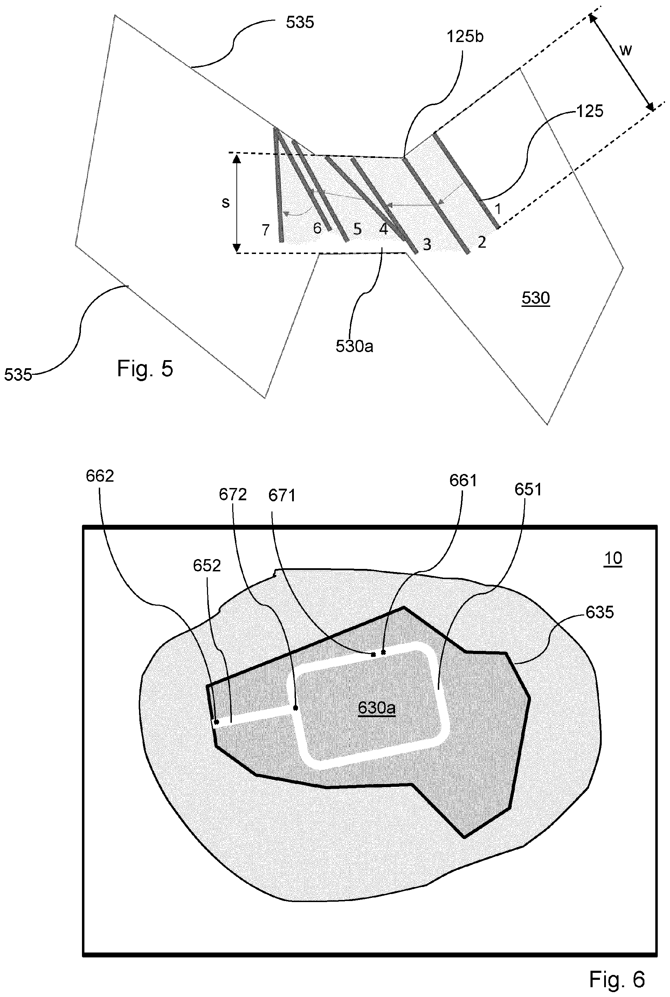

Fig. 5 shows a further example of an ROI 530 having a boundary 535. A portion of the ROI 530a has a local width s which is narrower than the maximum effective width w of the scraping blade 125. The blade is again shown at a number of different positions 1 - 7 during a scraping motion. As the blade moves from position 1 to 2, the local width of the ROI > w and the blade is oriented with the leading edge perpendicular to the direction of translation. The blade is rotated backwards about the vertical rotation axis that coincides with the outer edge 125b of the blade, while progressing forward to position 3 and the orientation angle is further adjusted to reduce the effective width of the blade as it enters the narrow portion 535a and progresses to position 4. The angle of orientation is adjusted, based on the local width of the ROI, as the blade progresses further to positions 5, 6 and 7, as shown.

In general, the most efficient manner of scraping a particular ROI is to start with the ROI boundary, and then scape the interior region in a number of subsequent scraping motions, as described above with respect to Fig. 4a. Depending on the type of the tissue sample, e.g. a tissue sample with a high tear strength as described earlier, there is a risk of flaking when the outer edge of the blade is used to sever the ROI from adjacent sample material at the ROI boundary. A different type of scraping path is then advisable comprising a number of scraping motions in which the blade is placed on the ROI boundary, with the front edge essentially parallel to the local contour, and is moved forwards towards the interior region of the ROI. When the length of a local contour portion is smaller than the width of the blade, the blade is not moved forward, but is only pressed down onto that portion, so as to sever it from the adjacent unwanted material. The severed portion may then be scraped in a subsequent scraping motion in which blade outer edge follows the local contour.

In accordance with the invention, each scraping motion ends i.e. the blade is lifted from the glass slide after it has reached an already-scraped area. The first scraping motion of the scraping path is then programmed to start at an interior region of the ROI.

An example of possible first and second scraping lanes is shown in Fig. 6. The blade is placed on the slide 10 at a start location 661 within the interior of the identified ROI boundary 635 and is moved forward to create a continuous first scraping lane 651 that fully encloses a region 630a of ROI material within the boundary. For the sake of simplicity, an essentially rectangular scraping lane 651 is depicted, although other enclosed geometries are possible. The blade is moved in "anticlockwise" direction until it returns to and passes the first start location 661 before being raised at stop location 671. In the second scaping motion, the blade is placed on the ROI boundary 635 at a second start location 662 and moved forward to create the second scraping lane 652. The second scraping motion ends at stop location 672, which lies on a portion of the first scraping lane 681. In subsequent scraping motions, the blade is returned to a new start location on the ROI boundary and moved inwards until reaching a previously created scraping lane. The process stops when all ROI material has been collected. Examples, embodiments or optional features, whether indicated as non-limiting or not, are not to be understood as limiting the invention as claimed. It should be noted that the above-mentioned embodiments illustrate rather than limit the invention.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware.

### Reference numerals

- 1-7: position of scraping blade at different moments within a scraping motion
- 10: glass slide
- 20: tissue sample
- 25: unwanted tissue material
- 30: region of interest (ROI)
- 30a: ribbon-shaped tissue material dissected in a scraping motion
- 30b: accumulation of tissue material that gets pushed forward in a scraping motion
- 35, 535, 635: boundary of ROI
- 35a, 35b: intersecting portions of an ROI boundary
- 38: corner within ROI boundary (where portions intersect at an angle ≤ 90 degrees)
- 51, 651: first scraping lane
- 52, 652': second scraping lane
- 61, 661: start location of first scraping lane
- 62, 662: start location of second scraping lane
- 71, 671: stop location of first scraping lane
- 72, 672: stop location of second scraping lane
- 100: dissection apparatus
- 110: platform for supporting glass slide
- 120, 220: dissection tool
- 125, 225: scraping blade of dissection tool
- 125a: base portion of a tubular scraping blade
- 125b: outer edge of scraping blade
- 125c: inner edge of scraping blade
- 128,228: internal cavity of dissection tool
- 130: robotic stage for adjusting position of blade relative to glass slide
- 140: controller
- 150: imaging system
- 160: vacuum generator
- 223: orifice of dissection tool
- 226: main body part of dissection tool
- 427: second tool body part
- 229: filter element
- 230: seat for retaining filter element
- 530, 630a: portion of ROI
- a: first translational movement of a scraping motion
- q: final translational movement of the scraping motion
- R: vertical rotation axis of dissection tool
- s: local width of a portion of the ROI
- w: width of scraping blade / scraping lane
- θ: orientation angle of blade relative to local contour portion

## Claims

1. An automated method of dissecting biological material from a region of interest (30, 530, 630) within a tissue sample (20) disposed on a planar substrate (10), using a dissection tool (120, 220) that comprises an internal cavity (128, 228) and a scraping blade (125) arranged at an entrance to the internal cavity;
the method comprising steps of:
• identifying a boundary (35, 535, 635) of the region of interest;
• calculating a scraping path for the scraping blade, based on the identified boundary, which will cause the scraping blade to engage with and scrape off all material in the region of interest and
• controlling the position of the dissection tool relative to the planar substrate, such that the scraping blade follows the calculated scraping path, whereby:
the calculated scraping path includes one or more individual scraping motions in which the blade (125) is pressed onto the planar substrate (10) at a start location (61, 62, 661, 662) within identified boundary and is moved forward through the ROI until reaching a stop location (71, 72, 671, 672) and being raised off the planar substrate, **characterized in that**
the scraping path is calculated such that the stop location of each individual scraping motion is positioned in an area within the identified boundary that has already been scraped using the scraping blade (125).

2. Method of claim 1, wherein the dissection tool is mounted so as to be rotational about a vertical axis of rotation (R) that coincides with an outer edge (125b) of the scraping blade; and wherein the calculated scraping path comprises a scraping motion in which a scraping lane (51, 651) is created that fully encloses at least a portion of the region of interest, whereby the position of the blade (125) is controlled so as to follow a circuit that will return to the blade to the start location (61, 661) and continue past the start location, such that the stop location (71, 671) is positioned on an already scraped part of the created scraping lane.

3. Method of claim 2, wherein the stop location is distanced from the start location by 20 - 150% of a width of the scraping blade, being a distance which is greater than a positional tolerance of a dissection apparatus to which the dissection tool is mounted.

4. Method of claim 2 or 3, wherein:
• an outer contour of the created scraping lane (51) coincides with the identified boundary (35); and
• the position of the scraping blade (125, 225) is controlled during the scraping motion such that the outer edge (125b) of the scraping blade follows the identified boundary (35) and is used to sever the material at the boundary from adjacent material (25) of the sample (20).

5. Method according to claim 4, wherein the step of identifying the boundary comprises identifying local contour portions (35a, 35b) of the boundary that intersect at corner (38) having an angle of 100 degrees or less and estimating the angle of intersection, and wherein the position of the scraping blade (125, 225) is controlled during the scraping motion such that before the corner (38) is reached, a leading edge of the scraping blade (125, 225) is rotated backwards about the vertical rotation axis (R), so as to be oriented at an angle (θ) smaller than the estimated angle of intersection.

6. Method according to claim 4 or 5, wherein the scraping motion in which the outer edge of the blade follows the identified boundary (35, 535) is the first scraping motion and an interior of the region of interest (30) is scraped in a number of subsequent scraping motions.

7. Method of claim 1 or 2, wherein the first scraping motion and associated first scraping lane (651) lies inside the identified boundary (635).

8. Method of claim 7, wherein the calculated scraping path comprises a number of subsequent scraping motions which have a start location (662) on the identified boundary, with a leading edge of the blade (125, 225) oriented parallel to a local contour of the boundary (635) at the corresponding start location, and whereby the blade is moved forwards towards the interior of the region of interest until reaching a stop location (672) that lies on the first scraping lane (651) or on a previously created scraping lane.

9. Method of claim 6 or 8, wherein the subsequent scraping motions create scraping lanes (52, 652) which are parallel to each other.

10. Method of claim 6, 8 or 9, wherein adjacent scraping lanes overlap each other by an amount corresponding to 5 - 20 % of the width (w) of the scraping blade (125).

11. Method of claim 9 or 10, further comprising identifying a direction in which the region of interest is of maximum length or in which a local contour portion of the ROI boundary (35) is of maximum length, and calculating the scraping path such that the parallel scraping lanes are executed in the identified direction of maximum length.

12. Method according to any preceding claim, wherein the step of calculating the scraping path further comprises estimating a local width (s) of the region of interest to be scraped in a particular scraping motion and orienting the leading edge of the scraping blade (125, 225) perpendicular to the direction of translation, unless the width of the blade (w) is less than the estimated local (s).

13. Method according to claim 7, wherein the dissection tool is mounted to an apparatus comprising an imaging system (150) and a processor, the method further comprising steps of capturing an image of at least a portion of the first scraping lane (651) and processing the captured image, whereby the step of processing comprises:
• detecting a boundary of the first scraping lane portion;
• comparing the detected boundary with a programmed path of a corresponding edge (125a, 125b) of the scraping blade (125, 225); and
• determining if the detected boundary deviates from the programmed path; and wherein if it is determined that deviation has occurred,
- the calculated scraping path comprises a number subsequent scraping motions as defined in claim 8 and wherein otherwise,
- the calculated scraping path comprises a subsequent scraping motion as defined in claim 4.

14. Method according to any preceding claim, wherein:
• the dissection tool (220) comprises a filter element (229) that spans the internal cavity (228) of the scraping tool;
• the dissection tool is in connection with a vacuum generator (160) for creating an uplifting airflow at the entrance (223) to the tool cavity that causes scraped material to be sucked into the tool and held at an underside of the filter element (229);
• the method comprises a step of calculating the distance travelled by the scraping blade (225) during scraping, and
• the method further comprises interrupting the scraping path, after completion of a scraping motion, if the calculated distance exceeds a predetermined threshold, whereby the threshold corresponds to a maximum surface area of sample material that can be held at the underside of the filter element (229) without adversely affecting suction performance, and restarting the scraping path after the scraped material has been transferred to a collection tube.

15. Dissection apparatus (100) comprising:
• a dissection tool having an internal cavity (128, 228) and a scraping blade (125) arranged at an entrance to the internal cavity;
• a vacuum generator (160) for generating an uplifting airflow at the entrance (223) to the tool internal cavity (228), whereby the tool further comprises a filter element (129) that spans the internal cavity;
• a platform (110) for supporting a planar substrate (10) on which a tissue sample (20) is disposed;
• an imaging system (150) for identifying a boundary (35, 535, 636) of a region of interest (30) within the tissue sample;
• a processor for calculating a scraping path that will cause the scraping blade (125, 225) to engage with all sample material within the identified boundary;
• a series of actuators (130) for moving the dissection tool relative to the platform (110) in X, Y and Z directions and for rotating the tool about a vertical rotation axis (R);
• a controller (140) for receiving the calculated scraping path and controlling the series of actuators (130) such that the scraping blade follows the calculated scraping path;
**characterized in that** the processor is configured to calculate the scraping path such that automated dissection is performed in accordance with the method of any of claims 1 - 14.

## Patentansprüche

1. Automatisiertes Verfahren zur Dissektion biologischen Materials aus einer Region von Interesse (30, 530, 630) innerhalb einer Gewebeprobe (20), die auf einem planaren Substrat (10) angeordnet ist, unter Verwendung eines Dissektionswerkzeugs (120, 220), das einen Innenhohlraum (128, 228) und eine Schabklinge (125) umfasst, die an einem Eingang zu dem Innenhohlraum angeordnet ist;
wobei das Verfahren die Schritte umfasst:
• Identifizieren einer Grenze (35, 535, 635) der Region von Interesse (ROI);
• Berechnen eines Schabpfads für die Schabklinge, basierend auf der identifizierten Grenze, der bewirken wird, dass die Schabklinge mit allem Material in der Region von Interesse in Eingriff tritt und dieses abschabt; und
• Steuern der Position des Dissektionswerkzeugs relativ zu dem planaren Substrat, so dass die Schabklinge dem berechneten Schabpfad folgt, wobei:
der berechnete Schabpfad eine oder mehrere einzelne Schabbewegungen einschließt, bei denen die Klinge (125) an einer Startposition (61, 62, 661, 662) innerhalb der identifizierten Grenze auf das planare Substrat (10) gedrückt wird und vorwärts durch die ROI bewegt wird, bis sie eine Stopp-Position (71, 72, 671, 672) erreicht und von dem planaren Substrat abgehoben wird, **dadurch gekennzeichnet, dass**
der Schabpfad so berechnet wird, dass die Stopp-Position jeder einzelnen Schabbewegung in einem Bereich innerhalb der identifizierten Grenze positioniert ist, der bereits unter Verwendung der Schabklinge (125) geschabt wurde.

2. Verfahren nach Anspruch 1, wobei das Dissektionswerkzeug so montiert ist, dass es um eine vertikale Rotationsachse (R) drehbar ist, die mit einer Außenkante (125b) der Schabklinge zusammenfällt; und wobei der berechnete Schabpfad eine Schabbewegung umfasst, bei der eine Schabbahn (51, 651) erzeugt wird, die mindestens einen Abschnitt der Region von Interesse vollständig umschließt, wobei die Position der Klinge (125) so gesteuert wird, dass sie einem Umlauf folgt, der zu der Klinge zu der Startposition (61, 661) zurückkehrt und über die Startposition hinaus fortgesetzt wird, so dass die Stopp-Position (71, 671) auf einem bereits geschabten Teil der erzeugten Schabbahn positioniert ist.

3. Verfahren nach Anspruch 2, wobei die Stopp-Position von der Startposition um 20 - 150 % einer Breite der Schabklinge beabstandet ist, wobei dies ein Abstand ist, der größer ist als eine Positionstoleranz einer Dissektionsvorrichtung, an der das Dissektionswerkzeug montiert ist.

4. Verfahren nach Anspruch 2 oder 3, wobei:
• eine Außenkontur der erzeugten Schabbahn (51) mit der identifizierten Grenze (35) zusammenfällt; und
• die Position der Schabklinge (125, 225) während der Schabbewegung so gesteuert wird, dass die Außenkante (125b) der Schabklinge der identifizierten Grenze (35) folgt und verwendet wird, um das Material an der Grenze von angrenzendem Material (25) der Probe (20) abzutrennen.

5. Verfahren nach Anspruch 4, wobei der Schritt des Identifizierens der Grenze das Identifizieren lokaler Konturabschnitte (35a, 35b) der Grenze, die sich an einer Ecke (38) schneiden, die einen Winkel von 100 Grad oder weniger aufweist, und das Schätzen des Schnittwinkels umfasst, und wobei die Position der Schabklinge (125, 225) während der Schabbewegung so gesteuert wird, dass, bevor die Ecke (38) erreicht wird, eine Vorderkante der Schabklinge (125, 225) um die vertikale Rotationsachse (R) nach hinten gedreht wird, um in einem Winkel (θ) ausgerichtet zu sein, der kleiner ist als der geschätzte Schnittwinkel.

6. Verfahren nach Anspruch 4 oder 5, wobei die Schabbewegung, bei der die Außenkante der Klinge der identifizierten Grenze (35, 535) folgt, die erste Schabbewegung ist und ein Inneres der Region von Interesse (30) in einer Anzahl nachfolgender Schabbewegungen geschabt wird.

7. Verfahren nach Anspruch 1 oder 2, wobei die erste Schabbewegung und die zugehörige erste Schabbahn (651) innerhalb der identifizierten Grenze (635) liegen.

8. Verfahren nach Anspruch 7, wobei der berechnete Schabpfad eine Anzahl nachfolgender Schabbewegungen umfasst, die eine Startposition (662) auf der identifizierten Grenze aufweisen, wobei eine Vorderkante der Klinge (125, 225) parallel zu einer lokalen Kontur der Grenze (635) an der entsprechenden Startposition ausgerichtet ist, und wobei die Klinge vorwärts in Richtung des Inneren der Region von Interesse bewegt wird, bis sie eine Stopp-Position (672) erreicht, die auf der ersten Schabbahn (651) oder auf einer zuvor erzeugten Schabbahn liegt.

9. Verfahren nach Anspruch 6 oder 8, wobei die nachfolgenden Schabbewegungen Schabbahnen (52, 652) erzeugen, die parallel zueinander sind.

10. Verfahren nach Anspruch 6, 8 oder 9, wobei benachbarte Schabbahnen einander um einen Betrag überlappen, der 5 - 20 % der Breite (w) der Schabklinge (125) entspricht.

11. Verfahren nach Anspruch 9 oder 10, ferner umfassend das Identifizieren einer Richtung, in der die Region von Interesse eine maximale Länge aufweist, oder in der ein lokaler Konturabschnitt der ROI-Grenze (35) eine maximale Länge aufweist, und das Berechnen des Schabpfads derart, dass die parallelen Schabbahnen in der identifizierten Richtung maximaler Länge ausgeführt werden.

12. Verfahren nach einem der vorhergehenden Ansprüche, wobei der Schritt des Berechnens des Schabpfads ferner das Schätzen einer lokalen Breite (s) der Region von Interesse, die in einer bestimmten Schabbewegung zu schaben ist, und das Ausrichten der Vorderkante der Schabklinge (125, 225) senkrecht zu der Translationsrichtung umfasst, es sei denn, die Breite der Klinge (w) ist kleiner als die geschätzte lokale (s).

13. Verfahren nach Anspruch 7, wobei das Dissektionswerkzeug an einer Vorrichtung montiert ist, die ein Bildgebungssystem (150) und einen Prozessor umfasst, wobei das Verfahren ferner Schritte des Aufnehmens eines Bildes von mindestens einem Abschnitt der ersten Schabbahn (651) und des Verarbeitens des aufgenommenen Bildes umfasst, wobei der Schritt des Verarbeitens umfasst:
• Detektieren einer Grenze des Abschnitts der ersten Schabbahn;
• Vergleichen der detektierten Grenze mit einem programmierten Pfad einer entsprechenden Kante (125a, 125b) der Schabklinge (125, 225); und
• Bestimmen, ob die detektierte Grenze von dem programmierten Pfad abweicht;
und wobei, falls bestimmt wird, dass eine Abweichung aufgetreten ist,
- der berechnete Schabpfad eine Anzahl nachfolgender Schabbewegungen wie in Anspruch 8 definiert umfasst und wobei andernfalls,
- der berechnete Schabpfad eine nachfolgende Schabbewegung wie in Anspruch 4 definiert umfasst.

14. Verfahren nach einem der vorhergehenden Ansprüche, wobei:
• das Dissektionswerkzeug (220) ein Filterelement (229) umfasst, das den Innenhohlraum (228) des Schabwerkzeugs überspannt;
• das Dissektionswerkzeug mit einem Vakuumgenerator (160) in Verbindung steht, um einen anhebenden Luftstrom an dem Eingang (223) zu dem Werkzeughohlraum zu erzeugen, der bewirkt, dass geschabtes Material in das Werkzeug angesaugt und an einer Unterseite des Filterelements (229) gehalten wird;
• das Verfahren einen Schritt des Berechnens der von der Schabklinge (225) während des Schabens zurückgelegten Strecke umfasst; und
• das Verfahren ferner das Unterbrechen des Schabpfads nach Abschluss einer Schabbewegung umfasst, wenn die berechnete Strecke einen vorbestimmten Schwellenwert überschreitet, wobei der Schwellenwert einer maximalen Oberfläche von Probenmaterial entspricht, die an der Unterseite des Filterelements (229) gehalten werden kann, ohne die Saugleistung nachteilig zu beeinflussen, und das erneute Starten des Schabpfads, nachdem das geschabte Material in ein Sammelröhrchen überführt wurde.

15. Dissektionsvorrichtung (100), umfassend:
• ein Dissektionswerkzeug mit einem Innenhohlraum (128, 228) und einer Schabklinge (125), die an einem Eingang zu dem Innenhohlraum angeordnet ist;
• einen Vakuumgenerator (160) zum Erzeugen eines anhebenden Luftstroms an dem Eingang (223) zu dem Werkzeuginnenhohlraum (228), wobei das Werkzeug ferner ein Filterelement (129) umfasst, das den Innenhohlraum überspannt;
• eine Plattform (110) zum Tragen eines planaren Substrats (10), auf dem eine Gewebeprobe (20) angeordnet ist;
• ein Bildgebungssystem (150) zum Identifizieren einer Grenze (35, 535, 636) einer Region von Interesse (30) innerhalb der Gewebeprobe;
• einen Prozessor zum Berechnen eines Schabpfads, der bewirken wird, dass die Schabklinge (125, 225) mit allem Probenmaterial innerhalb der identifizierten Grenze in Eingriff tritt;
• eine Reihe von Aktuatoren (130) zum Bewegen des Dissektionswerkzeugs relativ zu der Plattform (110) in X-, Y- und Z-Richtungen und zum Drehen des Werkzeugs um eine vertikale Rotationsachse (R);
• eine Steuerung (140) zum Empfangen des berechneten Schabpfads und zum Steuern der Reihe von Aktuatoren (130), so dass die Schabklinge dem berechneten Schabpfad folgt;
**dadurch gekennzeichnet, dass** der Prozessor dafür konfiguriert ist, den Schabpfad so zu berechnen, dass eine automatisierte Dissektion gemäß dem Verfahren nach einem der Ansprüche 1 - 14 durchgeführt wird.

## Revendications

1. Procédé automatisé de séparation par coupe de matériel biologique d'une région d'intérêt (30, 530, 630) à l'intérieur d'un échantillon de tissu (20) disposé sur un substrat plan (10), à l'aide d'un outil de coupe (120, 220) qui comprend une cavité interne (128, 228) et une lame de raclage (125) disposée à une entrée de la cavité interne ;
le procédé comprenant des étapes consistant à :
• identifier une limite (35, 535, 635) de la région d'intérêt ;
• calculer une trajectoire de raclage pour la lame de raclage, en fonction de la limite identifiée, de sorte que la lame de raclage entre en contact avec le matériel dans la région d'intérêt et le racle en totalité, et
• régler la position de l'outil de coupe par rapport au substrat plan, de manière à ce que la lame de raclage suive la trajectoire de raclage calculée,
la trajectoire de raclage calculée comprenant un ou plusieurs mouvements de raclage individuels par lesquels la lame (125) est pressée sur le substrat plan (10) à un emplacement de départ (61, 62, 661, 662) à l'intérieur de la limite identifiée et est déplacée vers l'avant à travers la région d'intérêt jusqu'à atteindre un emplacement d'arrêt (71, 72, 671, 672) puis est soulevée du substrat plan, **caractérisé en ce que**
la trajectoire de raclage est calculée de telle sorte que l'emplacement d'arrêt de chaque mouvement de raclage individuel soit positionné dans une zone à l'intérieur de la limite identifiée qui a déjà été raclée au moyen de la lame de raclage (125).

2. Procédé selon la revendication 1, dans lequel l'outil de coupe est monté rotatif autour d'un axe de rotation vertical (R) qui coïncide avec un bord extérieur (125b) de la lame de raclage ; et dans lequel la trajectoire de raclage calculée comprend un mouvement de raclage par lequel est créée une voie de raclage (51, 651) qui entoure complètement au moins une partie de la région d'intérêt, la position de la lame (125) étant réglée de manière à suivre un circuit qui ramène la lame à l'emplacement de départ (61, 661) et continue au-delà de l'emplacement de départ, de sorte que l'emplacement d'arrêt (71, 671) soit positionné sur une partie déjà raclée de la voie de raclage créée.

3. Procédé selon la revendication 2, dans lequel l'emplacement d'arrêt est éloigné de l'emplacement de départ de 20 à 150 % d'une largeur de la lame de raclage, ce qui est une distance qui est supérieure à une tolérance de position d'un appareil de coupe sur lequel l'outil de coupe est monté.

4. Procédé selon la revendication 2 ou 3, dans lequel :
• un contour extérieur de la voie de raclage (51) créée coïncide avec la limite identifiée (35) ; et
• la position de la lame de raclage (125, 225) est réglée pendant le mouvement de raclage de sorte que le bord extérieur (125b) de la lame de raclage suive la limite identifiée (35) et soit utilisé pour sectionner le matériel au niveau de la limite avec le matériel adjacent (25) de l'échantillon (20).

5. Procédé selon la revendication 4, dans lequel l'étape d'identification de la limite comprend l'identification de parties de contour local (35a, 35b) de la limite qui s'intersectent au coin (38) ayant un angle de 100 degrés ou moins et l'estimation de l'angle d'intersection, et dans lequel la position de la lame de raclage (125, 225) est réglée pendant le mouvement de raclage de sorte qu'avant d'atteindre le coin (38), un bord d'attaque de la lame de raclage (125, 225) est tourné vers l'arrière autour de l'axe vertical de rotation (R), de manière à être orienté à un angle (θ) inférieur à l'angle d'intersection estimé.

6. Procédé selon la revendication 4 ou 5, dans lequel le mouvement de raclage par lequel le bord extérieur de la lame suit la limite identifiée (35, 535) est le premier mouvement de raclage et un intérieur de la région d'intérêt (30) est raclé par un certain nombre de mouvements de raclage ultérieurs.

7. Procédé selon la revendication 1 ou 2, dans lequel le premier mouvement de raclage et la première voie de raclage (651) associée se trouvent à l'intérieur de la limite identifiée (635).

8. Procédé selon la revendication 7, dans lequel la trajectoire de raclage calculée comprend un certain nombre de mouvements de raclage ultérieurs qui ont un emplacement de départ (662) sur la limite identifiée, avec un bord d'attaque de la lame (125, 225) orienté parallèlement à un contour local de la limite (635) à l'emplacement de départ correspondant, la lame étant déplacée vers l'avant vers l'intérieur de la région d'intérêt jusqu'à atteindre un emplacement d'arrêt (672) situé sur la première voie de raclage (651) ou sur une voie de raclage préalablement créée.

9. Procédé selon la revendication 6 ou 8, dans lequel les mouvements de raclage ultérieurs créent des voies de raclage (52, 652) qui sont parallèles entre elles.

10. Procédé selon la revendication 6, 8 ou 9, dans lequel des voies de raclage adjacentes se chevauchent dans une mesure correspondant à 5 à 20 % de la largeur (w) de la lame de raclage (125).

11. Procédé selon la revendication 9 ou 10, comprenant en outre l'identification d'une direction dans laquelle la région d'intérêt présente une longueur maximale ou dans laquelle une partie de contour local de la limite de région d'intérêt (35) présente une longueur maximale, et le calcul de la trajectoire de raclage de telle sorte que les voies de raclage parallèles soient réalisées dans la direction identifiée de longueur maximale.

12. Procédé selon l'une quelconque des revendications précédentes, dans lequel l'étape de calcul de la trajectoire de raclage comprend en outre l'estimation d'une largeur locale (s) de la région d'intérêt à racler par un mouvement de raclage particulier et l'orientation du bord d'attaque de la lame de raclage (125, 225) perpendiculairement à la direction de translation, à moins que la largeur (w) de la lame soit inférieure à la largeur locale (s) estimée.

13. Procédé selon la revendication 7, dans lequel l'outil de coupe est monté sur un appareil comprenant un système d'imagerie (150) et un processeur, le procédé comprenant en outre les étapes consistant à capturer une image d'au moins une partie de la première voie de raclage (651) et à traiter l'image capturée, l'étape de traitement comprenant :
• détecter une limite de la partie de la première voie de raclage ;
• comparer la limite détectée avec une trajectoire programmée d'un bord correspondant (125a, 125b) de la lame de raclage (125, 225) ; et
• déterminer si la limite détectée dévie de la trajectoire programmée ; et, s'il est déterminé qu'il y a une déviation,
- la trajectoire de raclage calculée comprend un certain nombre de mouvements de raclage ultérieurs comme défini dans la revendication 8 et, si ce n'est pas le cas,
- la trajectoire de raclage calculée comprend un mouvement de raclage ultérieur comme défini dans la revendication 4.

14. Procédé selon l'une quelconque des revendications précédentes, dans lequel :
• l'outil de coupe (220) comprend un élément filtrant (229) qui s'étend d'un côté à l'autre de la cavité interne (228) de l'outil de raclage ;
• l'outil de coupe est relié à un générateur de vide (160) pour créer un flux d'air élévateur à l'entrée (223) de la cavité de l'outil, qui provoque l'aspiration du matériel raclé dans l'outil et son maintien au niveau d'une face inférieure de l'élément filtrant (229) ;
• le procédé comprenant une étape de calcul de la distance parcourue par la lame de raclage (225) lors du raclage et
• le procédé comprenant en outre l'interruption de la trajectoire de raclage, après l'accomplissement d'un mouvement de raclage, si la distance calculée dépasse un seuil prédéterminé, le seuil correspondant à une surface maximale de matériel d'échantillon qui peut être maintenue au niveau de la face inférieure de l'élément filtrant (229) sans nuire aux performances d'aspiration, et la reprise de la trajectoire de raclage après que le matériel raclé a été transféré à un tube de collecte.

15. Appareil de coupe (100) comprenant :
• un outil de coupe comportant une cavité interne (128, 228) et une lame de raclage (125) disposée à une entrée de la cavité interne ;
• un générateur de vide (160) pour générer un flux d'air élévateur à l'entrée (223) de la cavité interne (228) de l'outil, l'outil comprenant en outre un élément filtrant (129) qui s'étend d'un côté à l'autre de la cavité interne ;
• une plateforme (110) destinée à supporter un substrat plan (10) sur lequel est disposé un échantillon de tissu (20) ;
• un système d'imagerie (150) pour identifier une limite (35, 535, 636) d'une région d'intérêt (30) au sein de l'échantillon de tissu ;
• un processeur pour calculer une trajectoire de raclage avec laquelle la lame de raclage (125, 225) entrera en contact avec la totalité du matériel d'échantillon à l'intérieur de la limite identifiée ;
• une série d'actionneurs (130) pour déplacer l'outil de coupe par rapport à la plateforme (110) dans les directions X, Y et Z et pour faire tourner l'outil autour d'un axe de rotation vertical (R) ;
• un dispositif de commande (140) destiné à recevoir la trajectoire de raclage calculée et commander la série d'actionneurs (130) de sorte que la lame de raclage suive la trajectoire de raclage calculée ;
**caractérisé en ce que** le processeur est configuré pour calculer la trajectoire de raclage de telle sorte qu'une coupe automatisée soit effectuée conformément au procédé selon l'une quelconque des revendications 1 à 14.
